(19) **Europäisches Patentamt / European Patent Office / Office européen des brevets**

(11) **EP 3 244 156 B1**

(12) **EUROPEAN PATENT SPECIFICATION**

(45) Date of publication and mention
of the grant of the patent:
**24.02.2021 Bulletin 2021/08**

(51) Int Cl.:
*F28F 1/02* (2006.01)  *F25B 1/00* (2006.01)
*F28F 1/40* (2006.01)

(21) Application number: **15876873.9**

(22) Date of filing: **09.01.2015**

(86) International application number:
**PCT/JP2015/050464**

(87) International publication number:
**WO 2016/110997 (14.07.2016 Gazette 2016/28)**

(54) **HEAT EXCHANGER AND REFRIGERATION CYCLE APPARATUS HAVING SAID HEAT EXCHANGER**

WÄRMETAUSCHER UND KÄLTEKREISLAUFVORRICHTUNG MIT DIESEM WÄRMETAUSCHER

ÉCHANGEUR DE CHALEUR ET APPAREIL À CYCLE DE RÉFRIGÉRATION AYANT LEDIT ÉCHANGEUR DE CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2017 Bulletin 2017/46**

(73) Proprietor: **Mitsubishi Electric Corporation**
**Chiyoda-ku**
**Tokyo 100-8310 (JP)**

(72) Inventors:
• **ISHIBASHI, Akira**
  **Tokyo 100-8310 (JP)**
• **HIGASHIIUE, Shinya**
  **Tokyo 100-8310 (JP)**
• **ITO, Daisuke**
  **Tokyo 100-8310 (JP)**
• **MATSUI, Shigeyoshi**
  **Tokyo 100-8310 (JP)**

• **NAKAMURA, Shin**
  **Tokyo 100-8310 (JP)**
• **UGAJIN, Yuki**
  **Tokyo 100-8310 (JP)**
• **NISHIYAMA, Takumi**
  **Tokyo 100-8310 (JP)**
• **MOCHIZUKI, Atsushi**
  **Tokyo 102-0073 (JP)**

(74) Representative: **Pfenning, Meinig & Partner mbB**
**Patent- und Rechtsanwälte**
**Theresienhöhe 11a**
**80339 München (DE)**

(56) References cited:
**EP-A1- 1 342 970**     **WO-A1-02/42706**
**WO-A1-2014/178353**     **WO-A1-2014/178353**
**JP-A- 2010 175 158**     **JP-A- 2013 011 401**
**US-A- 5 476 141**

## Description

Technical Field

The present invention relates to a refrigeration cycle apparatus as defined in the preamble of claim 1 and as disclosed in WO2014178353.

Background Art

In a heat exchanger of a refrigeration cycle apparatus including a zeotropic refrigerant mixture, it is known that a liquid film rich in high-boiling-point refrigerant is formed on the wall of a heat transfer tube, a concentration boundary layer rich in low-boiling-point refrigerant is formed between a vapor phase and the liquid film, and the concentration boundary layer acts as mass diffusion resistance R (thermal resistance) to each component vapor and reduces heat transfer in the heat transfer tube.

It is known that to agitate such a concentration boundary layer and reduce the mass diffusion resistance R, a plurality of projections are formed on the inner surface of a heat transfer tube to improve the mass transfer coefficient $\beta v$ on the vapor side, reduce the mass diffusion resistance R (thermal resistance), and improve the heat transfer coefficient within the heat transfer tube (intratubular heat transfer coefficient K) (see Patent Literature 1 and Patent Literature 2, for example).

Citation List

Patent Literature

Patent Literature 1: Japanese Unexamined Patent Application Publication No. 8-075384
Patent Literature 2: Japanese Unexamined Patent Application Publication No. 2002-081881

Summary of Invention

Technical Problem

In a heat exchanger including projections in a heat transfer tube as described in Patent Literature 1 and Patent Literature 2, although the mass diffusion resistance R (thermal resistance) of a zeotropic refrigerant mixture can be reduced to improve the heat transfer coefficient within the heat transfer tube (intratubular heat transfer coefficient K), the projections increase the pressure drop of the refrigerant flowing therethrough. Furthermore, although projections can be formed by various forming methods, it is difficult to form projections, for example, when a flat tube is extruded.

The present invention solves such problems and aims to reduce the mass diffusion resistance R (thermal resistance) in a concentration boundary layer in the flow path of a flat tube of a heat exchanger with a zeotropic refrigerant mixture inclusive of HFO1123, R32, and HFO1234yf and thereby improve the heat transfer coefficient (intratubular heat transfer coefficient K) in the heat transfer tube. Solution to Problem

The refrigeration cycle apparatus according to the invention is defined in claim 1.

Advantageous Effects of Invention

In a refrigeration cycle apparatus according to the invention, the use of a zeotropic refrigerant mixture inclusive of HFO1123, R32, and HFO1234yf can reduce the mass diffusion resistance R (thermal resistance) in a concentration boundary layer in the flow path of a flat tube and thereby improve the heat transfer coefficient (intratubular heat transfer coefficient K) in the heat transfer tube.

Brief Description of Drawings

[Fig. 1] Fig. 1 is a cross-sectional view of a flat tube for use in an apparatus according to Embodiment 1 of the present invention.
[Fig. 2] Fig. 2 is an enlarged cross-sectional view of the flow path of the flat tube according to figure 1.

[Fig. 3] Fig. 3 is an explanatory view of thermal resistance in a heat transfer tube of the apparatus according to Embodiment 1 of the present invention.

[Fig. 4] Fig. 4 is a schematic view illustrating the state of a liquid film when the flow path according to Embodiment 1 of the present invention has a small r/d (where d is the distance between longitudinal line segments 2c of the flow path, and r is the radius of a rounded corner 2b of the flow path).

[Fig. 5] Fig. 5 is a schematic view illustrating the state of a liquid film when the flow path according to Embodiment 1 of the present invention has a large r/d (where d is the distance between the longitudinal line segments 2c of the flow path, and r is the radius of the rounded corner 2b of the flow path).

[Fig. 6] Fig. 6 is a gas-liquid phase equilibrium diagram of a zeotropic refrigerant mixture in the heat transfer tube according to Embodiment 1 of the present invention.

[Fig. 7] Fig. 7 is a graph of the relationship between the intratubular heat transfer coefficient K and the ratio r/d of the radius r of a rounded corner 2b to the distance d between longitudinal line segments 2c in a cross section of the flow path of a flat tube 1 when the heat exchanger according to Embodiment 1 of the present invention is used as a condenser.

[Fig. 8] Fig. 8 is a schematic view illustrating the state of a liquid film in the flow path of a flat tube used in the present invention.

[Fig. 9] Fig. 9 is a refrigerant circuit diagram of a refrigeration cycle apparatus according to the present invention.

Description of Embodiments

Embodiments of the present invention will be described below with reference to the accompanying drawings. However, the present invention is not limited to these embodiments.

Embodiment 1

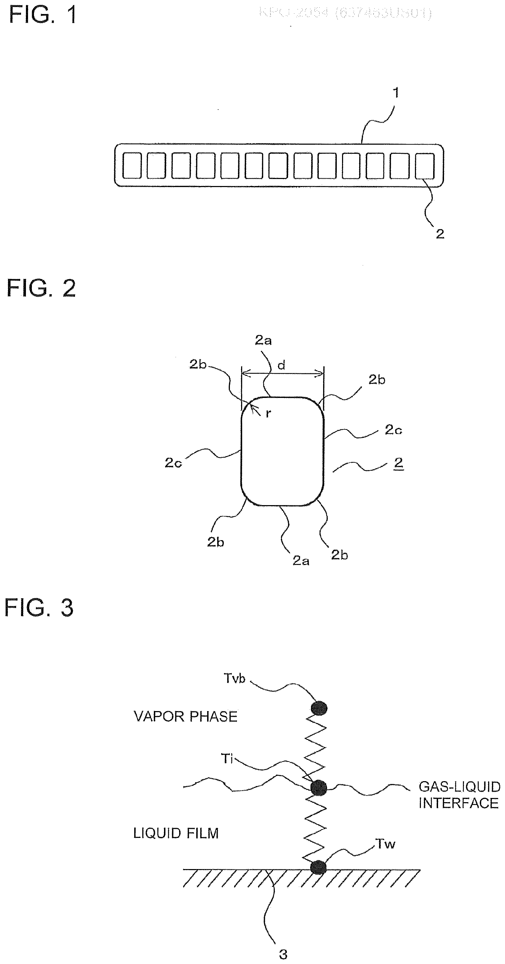

In Fig. 1, a flat tube 1 is a heat transfer tube of the heat exchanger and can be used in finned tube heat exchangers and other devices. The flat tube 1 is manufactured by extrusion of aluminum or another material. The flat tube 1 includes a plurality of flow paths 2 through which a heat medium, such as refrigerant, flows. The flow paths 2 have a generally rectangular cross-section as illustrated in Fig. 2 and are aligned unidirectionally such that refrigerant flows in parallel through the flat tube 1.

As illustrated in Fig. 2, the cross section of the flow path 2 is defined by a pair of parallel lateral line segments 2a, a pair of parallel longitudinal line segments 2c, and a set of four rounded corners 2b, each of the rounded corners 2b being a segment of a circumference of a circle having a radius r. Thus, the flow path 2 has a rectangular cross section with four rounded corners (a rounded rectangle).

Each of the rounded corners 2b is a quarter circle, and both ends thereof are smoothly connected to the lateral line segments 2a and the longitudinal line segments 2c.

In the heat exchanger according to Embodiment 1, the refrigerant is a zeotropic refrigerant mixture, for example, a three-refrigerant mixture of HFO1123, R32, and HFO1234yf.

Fig. 3 is an explanatory view of thermal resistance in a heat transfer tube of the heat exchanger according to Embodiment 1 of the present invention.

The heat transfer capability of a heat transfer tube is represented by the intratubular heat transfer coefficient K [W/m$^2$·K]. The intratubular heat transfer coefficient K is the heat transfer coefficient between refrigerant flowing through the heat transfer tube and the inner surface of the heat transfer tube and is an indicator of the heat exchange performance of the heat exchanger. A higher intratubular heat transfer coefficient K indicates lower thermal resistance of the heat transfer tube and higher heat exchange performance of the heat exchanger.

The intratubular heat transfer coefficient K depends on the state of refrigerant in the flow path of the heat transfer tube.

When gas refrigerant flows through the heat transfer tube and condenses, a vapor phase 4 (vapor bulk) flows through the center of the heat transfer tube, and heat transfer proceeds while a liquid film 5 is formed on a tube wall 3.

The intratubular heat transfer coefficient K is a function of the mass diffusion resistance R (thermal resistance) between the vapor phase 4 and the gas-liquid interface 6 and the heat transfer coefficient $\alpha$L of the liquid film 5.

First, the mass diffusion resistance R (thermal resistance) between the vapor phase 4 and the gas-liquid interface 6 will be described below.

The mass diffusion resistance R (thermal resistance) between the vapor phase 4 and the gas-liquid interface 6 is a function of the mass transfer coefficient $\beta$v between the vapor phase 4 and the gas-liquid interface 6. The mass diffusion resistance R decreases with increasing mass transfer coefficient $\beta$v.

A temperature difference between the vapor phase 4 of refrigerant and the gas-liquid interface 6 results from the mass diffusion resistance R (thermal resistance) between the vapor phase 4 and the gas-liquid interface 6. An increased mass diffusion resistance R results in an increased thermal resistance and an increased temperature difference between the vapor phase 4 of refrigerant and the gas-liquid interface 6 (an increased difference in the concentration of the zeotropic refrigerant mixture).

The temperature Tvb of the state point of vapor bulk, which is the temperature of the vapor phase 4 in the flow path 2, and the temperature Ti of the gas-liquid interface 6 depend on the mass transfer coefficient βv, the disturbance φv of the interphase gas-liquid interface, and the amount m of condensed refrigerant.

There is the relationship βv (mass transfer coefficient) ~ φv (disturbance of the interphase gas-liquid interface) × m (the amount of condensed refrigerant), and βv (mass transfer coefficient) increases with φv (disturbance of the interphase gas-liquid interface) × m (the amount of condensed refrigerant).

Thus, a higher mass transfer coefficient βv results in a lower mass diffusion resistance R and a higher intratubular heat transfer coefficient K. This results in a smaller difference between the temperature Tvb of the state point of vapor bulk and the temperature Ti of the gas-liquid interface 6.

Next, the heat transfer coefficient αL of the liquid film will be described below.

The temperature Ti of the gas-liquid interface and the wall temperature Tw of the flow path 2 depend on the heat conduction of the liquid phase and provide the following relationship: the heat transfer coefficient αL of the liquid film ~ λ (thermal conductivity)/δ (the thickness of the liquid film).

Thus, a decreased thickness of the liquid film δ and an increased heat transfer coefficient αL result in an increased intratubular heat transfer coefficient K.

Thus, to improve the intratubular heat transfer coefficient K, it is necessary to determine the maximum in the function of the mass diffusion resistance R between the vapor phase 4 and the gas-liquid interface 6 and the heat transfer coefficient αL of the liquid film.

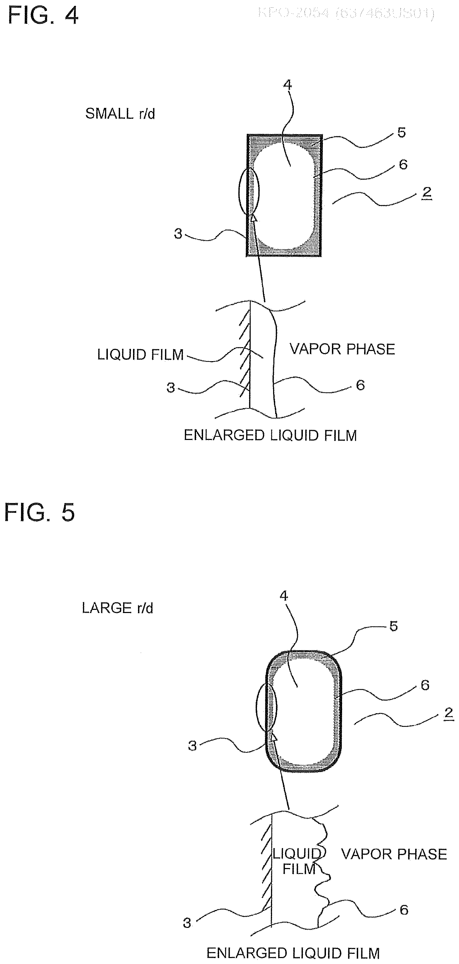

Fig. 4 is a schematic view illustrating the state of a liquid film when the flow path according to Embodiment 1 of the present invention has a small r/d (where d is the distance between longitudinal line segments 2c of the flow path, and r is the radius of the rounded corners 2b of the flow path).

Fig. 5 is a schematic view illustrating the state of a liquid film when the flow path according to Embodiment 1 of the present invention has a large r/d (where d is the distance between the longitudinal line segments 2c of the flow path, and r is the radius of the rounded corners 2b of the flow path).

When gas refrigerant flows through the heat transfer tube and condenses, as illustrated in Figs. 4 and 5, the gas refrigerant (vapor bulk) flows through the center of the heat transfer tube, and heat transfer proceeds while a liquid film 5 is formed on a tube wall 3. In Fig. 4 where r/d is small (d is the distance between the longitudinal line segments 2c of the flow path 2, and r is the radius of the rounded corners 2b of the flow path 2), the thickness δ of a liquid film is large at the four corners of the flow path 2 and is small along the line segments. The disturbance φv of the gas-liquid interface is small along the line segments due to the small thickness δ of the liquid film and is large at the four corners.

As illustrated in Fig. 5 where r/d is greater than that in the flow path 2 illustrated in Fig. 4, the thickness δ of the liquid film is substantially uniform throughout the line segments than the state illustrated in Fig. 4, thus resulting in greater disturbance φv of the gas-liquid interface.

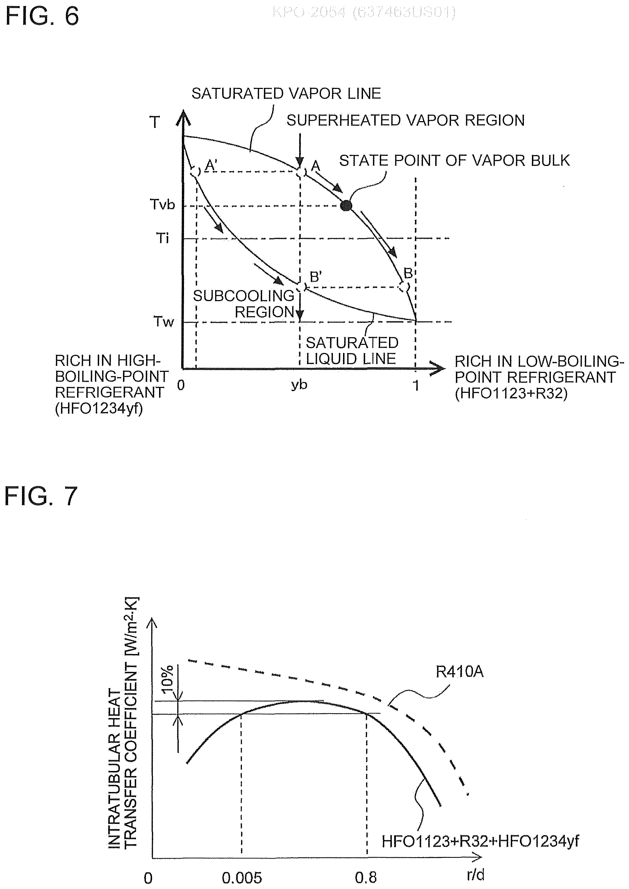

Fig. 6 is a gas-liquid phase equilibrium diagram of a zeotropic refrigerant mixture in the heat transfer tube according to Embodiment 1 of the present invention.

The zeotropic refrigerant mixture according to Embodiment 1 is a refrigerant mixture of low-boiling-point refrigerants HFO1123 + R32 and a high-boiling-point refrigerant HFO1234yf.

In Fig. 6, the state point of vapor bulk of the zeotropic refrigerant mixture is indicated by a filled circle and moves along the saturated vapor line. The temperature of the state point of vapor bulk is Tvb, the gas-liquid interface reaches the gas-liquid equilibrium state and has a temperature Ti, and the liquid phase and the wall temperature Tw are in the subcooling region.

For a zeotropic refrigerant mixture having a refrigerant composition yb, condensation in the heat exchanger begins when the state point of vapor bulk reaches the state of the point A from superheated vapor. The vapor bulk at the point A condenses into saturated liquid in the state of the point A'.

As condensation proceeds, a refrigerant mixture containing the high-boiling-point refrigerant HFO1234yf at a high component ratio condenses earlier, and the temperature Tvb of the state point of vapor bulk decreases gradually. The temperature Ti of the gas-liquid interface also decreases simultaneously.

Finally, the temperature Tvb of the state point of vapor bulk decreases to the condensing temperature of the point B, and the resulting saturated liquid has the refrigerant composition yb of the point B'.

When the charge composition of the high-boiling-point refrigerant HFO1234yf ranges from 50% to 90% of the zeotropic refrigerant mixture, the mass diffusion resistance R between the vapor bulk phase and the gas-liquid interface 6 increases. This results in a large temperature difference between the temperature Tvb of the state point of vapor bulk and the temperature Ti of the gas-liquid interface (difference in the concentration of the zeotropic refrigerant mixture). In this state, to improve the intratubular heat transfer coefficient K, it is effective to cause the disturbance φv of the gas-liquid interface as illustrated in Fig. 5 to increase the mass transfer coefficient βv and decrease the mass diffusion resistance R.

By contrast, when the charge composition of HFO1234yf is 50% or less of the zeotropic refrigerant mixture, the mass diffusion resistance R between the vapor phase 4 and the gas-liquid interface 6 decreases, and the characteristics approaches those of a single refrigerant. This results in a small temperature difference between the temperature Tvb of the state point of vapor bulk and the temperature Ti of the gas-liquid interface (difference in the concentration of the zeotropic refrigerant mixture). Thus, the disturbance $\phi v$ of the gas-liquid interface contributes less to the improvement of the intratubular heat transfer coefficient K.

The component ratio of the low-boiling-point refrigerants HF01123 and R32 ranges from approximately 50:50 to approximately 40:60, and the low-boiling-point refrigerants form a near-azeotropic refrigerant. Thus, the refrigerant mixture of HFO1123 and R32 is construed to have the characteristics of an almost single refrigerant.

From the above, when the heat exchanger according to Embodiment 1 is used as a condenser, the relationship between the intratubular heat transfer coefficient K and the ratio r/d of the radius r of the rounded corners 2b to the distance d between the longitudinal line segments 2c in a cross section of the flow path 2 of the flat tube 1 will be described below with reference to Fig. 7.

Fig. 7 is a graph of relationship between the intratubular heat transfer coefficient K and the ratio r/d of the radius r of the rounded corners 2b to the distance d between the longitudinal line segments 2c in a cross section of the flow path of the flat tube 1 when the heat exchanger according to Embodiment 1 is used as a condenser.

When the mass velocity Gr of refrigerant in the flow path 2 is 200 [kg/m$^2$·s], which is the condition employed in general heat exchangers, and the ratio r/d of the radius r of the rounded corners 2b to the distance d between the longitudinal line segments 2c in a cross section of the flow path 2 is in the range of $0.005 \leq r/d \leq 0.8$, the intratubular heat transfer coefficient K [W/m$^2$·K] is in its maximum range within 10% or less of the maximum value, and these are optimum values in terms of efficiency.

For a near-azeotropic refrigerant mixture R410A, the intratubular heat transfer coefficient K [W/m$^2$·K] increases with decreasing r/d.

This will be described below.

In Fig. 7, when r/d decreases, the thickness of the liquid film 5 increases at the four corners of the flow path 2 and decreases along the longitudinal line segments 2c and the lateral line segments 2a. This decreases the thickness $\delta$ of the liquid film between the gas-liquid interface 6 and the heat transfer wall of the heat transfer tube, increases the heat transfer coefficient $\alpha L$ of the liquid film 5, and improves the intratubular heat transfer coefficient K.

In a region with 0.005 > r/d, however, the disturbance $\phi v$ of the gas-liquid interface in effective heat transfer portions of the longitudinal line segments 2c and the lateral line segments 2a decreases, the mass diffusion resistance R on the vapor side increases, and the intratubular heat transfer coefficient K decreases significantly. With these contradictory effects, the total intratubular heat transfer coefficient K decreases.

Although the liquid film at the rounded corners 2b has disturbance $\phi v$ at the gas-liquid interface, a small amount m of condensed refrigerant results in a low mass transfer coefficient $\beta v$, a high mass diffusion resistance R, and a low intratubular heat transfer coefficient K. Furthermore, the large thickness $\delta$ of the liquid film results in a low heat transfer coefficient $\alpha L$ of the liquid film 5 and a low intratubular heat transfer coefficient K.

In a region of $0.005 \leq r/d \leq 0.8$, the liquid film 5 is not so thick at the four corners, and the thickness $\delta$ of the liquid film along the longitudinal line segments 2c and the lateral line segments 2a is greater than that in a region of 0.005 > r/d. This results in a decreased heat transfer coefficient $\alpha L$ of the liquid film 5 and a decreased intratubular heat transfer coefficient K.

However, the disturbance $\phi v$ of the gas-liquid interface increases with the thickness $\delta$ of the liquid film, and the mass diffusion resistance R decreases. Thus, the total intratubular heat transfer coefficient K is higher than that in the region of 0.005 > r/d.

In a region of 0.8 < r/d, the liquid film 5 is negligibly thickened at the four corners, and the thickness $\delta$ of the liquid film along the longitudinal line segments 2c and the lateral line segments 2a is greater than that in the region of $0.005 \leq r/d \leq 0.8$. This results in a low heat transfer coefficient $\alpha L$ of the liquid film 5 and a lower total intratubular heat transfer coefficient K than that in the region of $0.005 \leq r/d \leq 0.8$.

Thus, when the ratio r/d of the radius r of the rounded corners 2b to the length d of the lateral line segments 2a in a cross section of the flow path 2 is in the range of $0.005 \leq r/d \leq 0.8$, the use of the zeotropic refrigerant mixture inclusive of HFO1123, R32, and HFO1234yf can decrease the mass diffusion resistance R (thermal resistance) in a concentration boundary layer in the flow path of the flat tube and optimize the intratubular heat transfer coefficient K [W/m$^2$·K] in terms of efficiency.

Although the heat exchanger according to Embodiment 1 functions as a condenser in the above description, the same effects on the intratubular heat transfer coefficient K [W/m$^2$·K] can be achieved when the heat exchanger according to Embodiment 1 functions as an evaporator.

Embodiment 2

In Embodiment 1, the flow path 2 of the flat tube 1 has a generally rectangular cross-section. Embodiment 2 is different from Embodiment 1 in that in addition to the shape of the flow path 2 according to Embodiment 1, protrusions 2d having a projected shape are provided to the longitudinal line segments 2c in a cross section of the flow path 2.

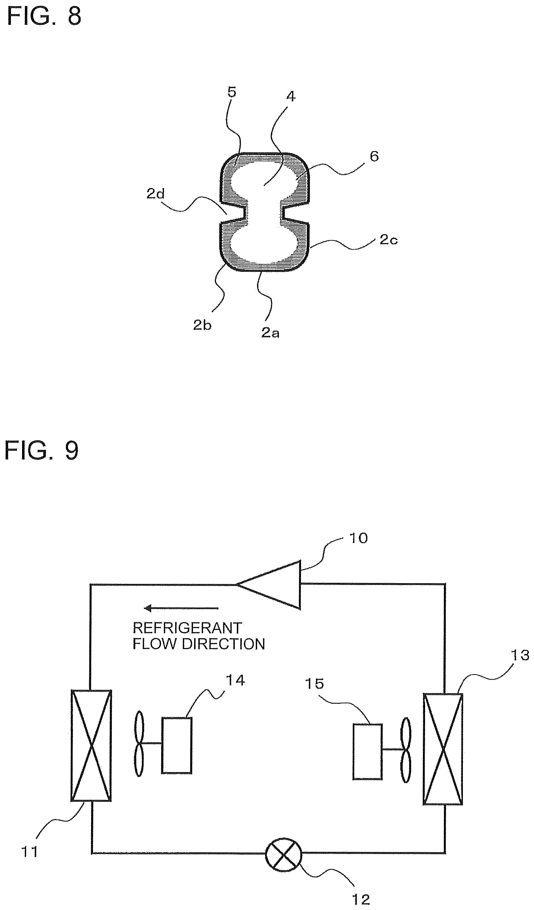

Fig. 8 is a schematic view illustrating the state of a liquid film 5 in the flow path of a flat tube according to Embodiment 2 of the present invention.

The liquid film 5 is almost uniformly formed on the inner circumference of the flow path 2. This is because liquid disperses around both the rounded corners 2b and the protrusions 2d, and the liquid film 5 is rarely thickened in a particular portion.

This ensures a uniform thickness $\delta$ of the liquid film in the effective heat transfer portion and increases the disturbance $\phi v$ of the gas-liquid interface. This decreases the mass diffusion resistance R on the vapor side and improves the intratubular heat transfer coefficient K. This can also increase the intratubular heat transfer area and improve the heat exchanger efficiency.

Fig. 9 is a refrigerant circuit diagram of a refrigeration cycle apparatus according to Embodiments 1 and 2 of the present invention.

The refrigerant circuit diagram of Fig. 9 includes a compressor 10, a condenser heat exchanger 11, an expansion valve 12, an evaporator heat exchanger 13, and fans 14 and 15.

The heat exchanger including the flat tube 1 according to Embodiments 1 or 2 of the present invention is applicable to the condenser heat exchanger 11, the evaporator heat exchanger 13, or both. The employment thereof provides a refrigeration cycle apparatus having high energy efficiency.

The energy efficiency includes the following formulae.

$$\text{Heating energy efficiency} = \text{indoor heat exchanger (condenser) capacity/total}$$

$$\text{energy input}$$

$$\text{Cooling energy efficiency} = \text{indoor heat exchanger (evaporator) capacity/total}$$

$$\text{energy input}$$

In the heat exchanger described in Embodiment 1 and a refrigeration cycle apparatus including the heat exchanger, any refrigerating machine oil, such as mineral oil, alkylbenzene oil, ester oil, ether oil, or fluorine oil, can offer the advantages irrespective of the solubility of the oil in refrigerant.

Reference Signs List

1 flat tube, 2 flow path, 2a lateral line segment, 2b rounded corner, 2c longitudinal line segment, 2d protrusion, 3 tube wall, 4 vapor phase, 5 liquid film, 6 gas-liquid interface, 10 compressor, 11 condenser heat exchanger, 12 expansion valve, 13 evaporator heat exchanger, 14 fan, 15 fan, K intratubular heat transfer coefficient, R mass diffusion resistance, Ti gas-liquid interface temperature, Tvb temperature of state point of vapor bulk, Tw wall temperature, m amount of condensation, r radius of rounded corner, d distance between pair of longitudinal line segments, yb refrigerant composition, $\alpha$L heat transfer coefficient of liquid film, $\beta$v mass transfer coefficient on vapor side, $\lambda$ heat transfer coefficient of liquid film, $\delta$ thickness of liquid film, $\phi$v disturbance of gas-liquid interface.

**Claims**

1. A refrigeration cycle apparatus comprising:

   a heat exchanger (11, 13), wherein
   a refrigerant mixture is inclusive of HFO1123, R32, and HFO1234yf the apparatus being **characterized in that**
   a flat tube (1) is configured to allow the refrigerant mixture to flow therethrough as a heat medium,
   the flat tube (1) has a plurality of flow paths (2) for the heat medium, and
   each of the plurality of flow paths (2) has a rectangular shape in cross section, the rectangular shape is defined by a pair of longitudinal line segments (2c) opposed to each other, a pair of lateral line segments (2a) opposed to each other, and a set of four rounded corners (2b), each of the rounded corners (2b) is a segment of a circumference of a circle, the pair of longitudinal line segments (2c) intersects with the pair of lateral line segments (2a) at the rounded corners (2b),

the rectangular shape is configured to satisfy

$0.005 \leq r/d \leq 0.8$

where r is a radius of the circle, and d is a distance between the pair of longitudinal line segments (2c) opposed to each other;

a mixture ratio of HFO1234yf in the refrigerant mixture ranges from 50% to 90% by weight.

2. The heat exchanger (11, 13) of claim 1, wherein the longitudinal line segments (2c) have a protrusion (2d) extending in a longitudinal direction of the flat tube (1).

3. The heat exchanger (11, 13) of any one of claims 1 to 2, wherein the flat tube (1) is formed by extrusion.

## Patentansprüche

1. Kältekreislaufvorrichtung, umfassend:

einen Wärmetauscher (11, 13), wobei
ein Kältemittelgemisch HFO1123, R32 und HFO1234yf enthält, wobei die Vorrichtung **dadurch gekennzeichnet ist, dass** eine Flachleitung (1) eingerichtet ist, zu ermöglichen, dass das Kältemittelgemisch als ein Wärmemedium durch diese hindurchströmen kann,
die Flachleitung (1) eine Vielzahl von Strömungspfaden (2) für das Wärmemedium aufweist, und
jeder der Vielzahl von Strömungspfaden (2) im Querschnitt eine rechteckige Form aufweist, wobei die rechteckige Form definiert ist durch ein Paar von longitudinalen Leitungssegmenten (2c), die einander gegenüberliegen, ein Paar von lateralen Leitungssegmenten (2a), die einander gegenüberliegen, und eine Gruppe von vier abgerundeten Ecken (2b), wobei jede der abgerundeten Ecken (2b) ein Segment eines Umfangs eines Kreises ist, wobei sich das Paar von longitudinalen Leitungssegmenten (2c) mit dem Paar von lateralen Leitungssegmenten (2a) an den abgerundeten Ecken (2b) schneidet,
wobei die rechteckige Form ausgebildet ist, zu erfüllen:
$0,005 \leq r/d \leq 0,8$
wobei r ein Radius des Kreises ist, und d ein Abstand ist zwischen dem Paar von longitudinalen Liniensegmenten (2c), die einander gegenüberliegen;
ein Mischungsverhältnis von HFO1234yf in dem Kältemittelgemisch in einem Bereich von 50 bis 90 Gewichtsprozent liegt.

2. Wärmetauscher (11, 13) nach Anspruch 1, wobei die longitudinalen Liniensegmente (2c) einen Vorsprung (2d) aufweisen, der sich in einer Längsrichtung der Flachleitung (1) erstreckt.

3. Wärmetauscher (11, 13) nach einem der Ansprüche 1 bis 2, wobei die Flachleitung (1) durch Extrusion ausgeformt ist.

## Revendications

1. Appareil à cycle de réfrigération comprenant :

un échangeur de chaleur (11, 13), dans lequel
un mélange de fluide frigorigène comprend du HFO1123, du R32, et du HFO1234yf, l'appareil étant **caractérisé en ce que** : un tube plat (1) est configuré pour permettre au mélange de fluide frigorigène de circuler à travers, en tant que milieu thermique,
le tube plat (1) présente une pluralité de chemins d'écoulement (2) pour le milieu thermique, et
chacun de la pluralité de chemins d'écoulement (2) présente une section transversale de forme rectangulaire, la forme rectangulaire est définie par une paire de segments de ligne longitudinale (2c) opposés l'un à l'autre, une paire de segments de ligne latérale (2a) opposés l'un à l'autre, et un ensemble de quatre coins arrondis (2b), chacun des coins arrondis (2b) est un segment d'une circonférence d'un cercle, la paire de segments de ligne longitudinale (2c) coupe la paire de segments de ligne latérale (2a) au niveau des coins arrondis (2b),
la forme rectangulaire est configurée afin de satisfaire à :

$$0,005 \leq r/d \leq 0,8$$

où r est le rayon du cercle, et d est la distance entre chacun de la paire de segments de ligne longitudinale (2c) opposés l'un à l'autre ;

le rapport de mélange du HFO1234yf dans le mélange de fluide frigorigène, est compris entre 50 % et 90 % en poids.

2.  Échangeur de chaleur (11, 13) selon la revendication 1, dans lequel les segments de ligne longitudinale (2c) présentent une saillie (2d) qui s'étend dans la direction longitudinale du tube plat (1).

3.  Échangeur de chaleur (11, 13) selon l'une quelconque des revendications 1 et 2, dans lequel le tube plat (1) est formé par extrusion.

**FIG. 1**

**FIG. 2**

**FIG. 3**

# FIG. 4

SMALL r/d

4

5

6

2

3

LIQUID FILM

VAPOR PHASE

3

6

ENLARGED LIQUID FILM

# FIG. 5

LARGE r/d

4

5

6

2

3

LIQUID FILM

VAPOR PHASE

3

6

ENLARGED LIQUID FILM

FIG. 6

SATURATED VAPOR LINE

SUPERHEATED VAPOR REGION

STATE POINT OF VAPOR BULK

T

A'          A

Tvb

Ti

B'          B

SUBCOOLING
REGION

Tw

SATURATED
LIQUID LINE

RICH IN HIGH-
BOILING-POINT
REFRIGERANT
(HFO1234yf)

0          yb          1

RICH IN LOW-BOILING-
POINT REFRIGERANT
(HFO1123+R32)

FIG. 7

INTRATUBULAR HEAT
TRANSFER COEFFICIENT [W/m²·K]

10%

R410A

HFO1123+R32+HFO1234yf

0          0.005          0.8          r/d

11

FIG. 8

FIG. 9

REFERANT FLOW DIRECTION

## REFERENCES CITED IN THE DESCRIPTION

**Patent documents cited in the description**

- WO 2014178353 A
- JP 8075384 A
- JP 2002081881 A